# EUROPÄISCHE PATENTANMELDUNG

(11) **EP 2 399 695 A1**
(43) Veröffentlichungstag der Anmeldung: **28.12.2011**
(21) Anmeldenummer: 10006497.1
(22) Anmeldetag: 22.06.2010
(51) Int. Cl.: B22F 3/105, B29C 67/00, B29D 30/06

(54) **Verfahren und Vorrichtung zur Herstellung einer dreidimensionalen Struktur auf einer gekrümmten Basisebene**

(71) Anmelder: SLM Solutions GmbH, 23556 Lübeck (DE)
(72) Erfinder: Zilian, Cersten, 56244 Vielbach (DE); Haack, Bodo, 23858 Wesenberg (DE); Schöneborn, Dipl.-Ing. Henner, 23556 Lübeck (DE)
(74) Vertreter: Schicker, Silvia

(57) **Zusammenfassung**

Ein Verfahren zur Herstellung einer dreidimensionalen Struktur auf einer gekrümmten Basisebene durch Beaufschlagen von Pulverschichten mit elektromagnetischer Strahlung oder Teilchenstrahlung umfasst das Auftragen einer Rohstoffpulverschicht auf die gekrümmte Basisebene mittels einer Pulverauftragvorrichtung (26) sowie das Glätten der auf die gekrümmte Basisebene aufgetragenen Rohstoffpulverschicht mittels eines Glättungsschiebers (40), der derart über die Rohstoffpulverschicht geführt wird, dass eine über die Rohstoffpulverschicht streichende Glättungsfäche (42) des Glättungsschiebers (40) parallel zu der gekrümmten Basisebene bewegt wird. Die geglättete Rohstoffpulverschicht wird mit elektromagnetischer Strahlung oder Teilchenstrahlung beaufschlagt.

## Beschreibung

Die Erfindung betrifft ein Verfahren und eine Vorrichtung zur Herstellung einer dreidimensionalen Struktur auf einer gekrümmten Basisebene durch Beaufschlagen von Pulverschichten mit elektromagnetischer Strahlung oder Teilchenstrahlung. Ferner betrifft die Erfindung ein mittels eines derartigen Verfahrens bzw. mittels einer derartigen Vorrichtung hergestelltes Formelement, beispielsweise ein Vulkanisationsformsegment, das zur Verwendung bei der Herstellung von rotationssymmetrischen Bauteilen, wie zum Beispiel Reifen, insbesondere Automobilreifen, geeignet ist. Schließlich betrifft die Erfindung ein unter Verwendung eines derartigen Formelements hergestelltes rotationssymmetrisches Bauteil.

Bei der Herstellung moderner Automobilreifen wird üblicherweise zunächst eine Unterkonstruktion, die sogenannten Karkasse, erstellt. Die Karkasse wird mit aus einer Kautschukmischung extrudierten Reifenkomponenten, wie Laufstreifen und Seitenwände zu einem Reifenrohling verbunden. Der Reifenrohling wird schließlich unter einem Druck von bis zu 22 bar und bei einer Temperatur zwischen 165 und 220°C einer Vulkanisationsbehandlung unterzogen, während der die plastische Kautschukmischung in eine elastische Gummimischung überführt und die Bauteile des Reifens unlösbar miteinander verbunden werden. Ferner wird während der Vulkanisationsbehandlung mittels einer Vulkanisationsform das gewünschte Profil auf den Laufstreifen des Reifenrohlings geprägt. Die Vulkanisationsform besteht in der Regel aus mehreren, Segmenten, deren Grundform an die Form und insbesondere die Krümmung des Laufstreifens angepasst ist. Insbesondere umfasst jedes Vulkanisationsformsegment eine gekrümmte Grundstruktur, die im Bereich einer auf den Laufstreifen zu pressenden Pressfläche mit einer Negativstruktur des Reifenprofils versehen ist. Derzeit gängige Vulkanisationsformen bestehen aus Stahl oder Aluminiumlegierungen, wobei die komplexen Profilstrukturen üblicherweise durch Fräsen erzeugt werden.

Als Alternative zu spanenden Formgebungsverfahren sind generative Schichtbauverfahren, wie zum Beispiel das selektive Laserschmelzen oder Lasersintern bekannt, durch die pulverförmige, insbesondere metallische, keramische und/oder aus einem Kunststoffmaterial bestehende Rohstoffe zu komplex geformten dreidimensionalen Werkstücken verarbeitet werden können. Hierzu wird eine Rohstoffpulverschicht auf einen Träger aufgebracht und in Abhängigkeit der gewünschten Geometrie des zu erstellenden Werkstücks ortselektiv mit Laserstrahlung beaufschlagt. Die in die Pulverschicht eindringende Laserstrahlung bewirkt eine Erwärmung und folglich eine Verschmelzung oder Versinterung der Rohstoffpulverpartikel. Anschließend werden sukzessiv weitere Rohstoffpulverschichten auf die bereits laserbehandelte Schicht auf dem Träger aufgebracht, bis das Werkstück die gewünschte Form und Größe hat. Selektives Laserschmelzen oder Lasersintern kann insbesondere zur Herstellung von Prototypen, Werkzeugen, Ersatzteilen oder medizinischen Prothesen anhand von CAD-Daten eingesetzt werden.

Eine aus der EP 1 793 979 A1 bekannte Anlage zur Herstellung von Formkörpern aus pulverförmigen Rohstoffen durch selektives Laserschmelzen umfasst einen Prozessraum, in dem eine Mehrzahl von ebenen Trägern für die herzustellenden Formkörper angeordnet ist. Eine Pulverschicht-Präparierungseinrichtung umfasst einen Pulverreservoirhalter, in dem mehrere, den einzelnen Trägern zugeordnete Einstecköffnungen ausgebildet sind. Die Einstecköffnungen nehmen als Pulverreservoirs dienende Wechselbehälter auf. Im Betrieb der Anlage wird der Pulverreservoirhalter durch einen in dem Prozessraum angeordneten Spindeltrieb horizontal über die Träger hin-und herbewegt, wobei Pulver aus den Wechselbehältern auf die Träger aufgebracht wird. Die Wechselbehälter sind jeweils mit Pulverabstreifelementen versehen, die dazu dienen, bei der Bewegung des Pulverreservoirhalters über die Träger die auf die Träger aufgebrachte Pulverschicht glatt zu streichen und auf eine gewünschte Höhe zu nivellieren. Die auf die Träger aufgebrachte Pulverschicht wird schließlich selektiv mit Laserstrahlung beaufschlagt.

Die Erfindung ist auf die Aufgabe gerichtet, ein Verfahren und eine Vorrichtung anzugeben, die die Herstellung einer dreidimensionalen Struktur auf einer gekrümmten Basisebene durch Beaufschlagen von Pulverschichten mit elektromagnetischer Strahlung oder Teilchenstrahlung ermöglichen. Ferner ist die Erfindung auf die Aufgabe gerichtet, ein mittels eines derartigen Verfahrens bzw. mittels einer derartigen Vorrichtung hergestelltes Formelement, das zur Verwendung bei der Herstellung von rotationssymmetrischen Bauteilen geeignet ist, bereitzustellen. Schließlich ist die Erfindung auf die Aufgabe gerichtet, ein unter Verwendung eines derartigen Formelements hergestelltes rotationssymmetrisches Bauteil anzugeben.

Diese Aufgabe wird durch ein Verfahren mit den Merkmalen des Anspruchs 1, eine Vorrichtung mit den Merkmalen des Anspruchs 8, ein Formelement mit den Merkmalen des Anspruchs 15 und ein rotationssymmetrisches Bauteil mit den Merkmalen des Anspruchs 16 gelöst.

Das erfindungsgemäße Verfahren dient zur Herstellung einer dreidimensionalen Struktur auf einer gekrümmten Basisebene durch Beaufschlagen von Pulverschichten mit elektromagnetischer Strahlung oder Teilchenstrahlung. Die gekrümmte Basisebene kann dabei durch einen Träger gebildet werden, der dazu dient, während der Herstellung der dreidimensionalen Struktur ein Rohstoffpulver sowie die durch generativen Schichtaufbau aus dem Rohstoffpulver gefertigte Struktur aufzunehmen. Alternativ dazu kann die gekrümmte Basisebene jedoch auch Teil eines Bauteils sein, das durch das erfindungsgemäße Verfahren mit einer dreidimensionalen Struktur versehen werden soll.

Bei dem erfindungsgemäßen Verfahren wird mittels einer Pulverauftragvorrichtung eine Rohstoffpulverschicht auf die gekrümmte Basisebene bzw. eine bereits erstellte Schicht der zu erzeugenden dreidimensionalen Struktur aufgetragen. Das von der Pulverauftragvorrichtung aufgetragene Rohstoffpulver kann ein Kunststoffpulver, ein keramisches Pulver, ein metallisches Pulver und/oder ein beliebiges anderes Pulver mit einer beliebigen geeigneten Korngröße bzw. Korngrößenverteilung sein. Vorzugsweise werden Pulver mit Korngrößen < 200 µm verarbeitet. Die Pulverauftragvorrichtung umfasst vorzugsweise mindestens eine Pulverkammer, die dazu dient, über eine Pulvereinlassöffnung in die Pulverauftragvorrichtung zugeführtes und auf den Träger der Vorrichtung zur Herstellung von Werkstücken durch Beaufschlagen von Pulverschichten mit elektromagnetischer Strahlung oder Teilchenstrahlung aufzubringendes Rohstoffpulver aufzunehmen. Die Pulverkammer kann so dimensioniert sein, dass sie das gesamte zur Herstellung eines Werkstücks benötigte Rohstoffpulver aufnehmen kann. Alternativ dazu kann die Pulverkammer jedoch auch kleiner ausgeführt und die Pulvereinlassöffnung mit einer entsprechenden Pulvernachführvorrichtung zur Nachführung von Pulver in die Pulverkammer der Pulverauftragvorrichtung verbunden sein. Die Pulvernachführung kann kontinuierlich oder diskontinuierlich erfolgen. Zur Abfuhr von Rohstoffpulver aus der Pulverkammer kann die Pulverauftragvorrichtung mit mindestens einer, vorzugsweise verschließbaren Pulvereinlassöffnung versehen sein.

Die mittels der Pulverauftragvorrichtung auf die gekrümmte Basisebene bzw. eine bereits erstellte Schicht der dreidimensionalen Struktur aufgetragene Rohstoffpulverschicht wird mittels eines Glättungsschiebers geglättet, der derart über die Rohstoffpulverschicht geführt wird, dass eine über die Rohstoffpulverschicht streichende Glättungsfläche des Glättungsschiebers parallel zu der gekrümmten Basisebene bzw. der bereits erstellten Schicht der dreidimensionalen Struktur bewegt wird. Dadurch wird die Rohstoffpulverschicht derart auf der gekrümmten Basisebene bzw. der bereits erstellten Schicht der dreidimensionalen Struktur verteilt, dass sich die Oberfläche der Rohstoffpulverschicht im Wesentlichen parallel zu der gekrümmten Basisebene bzw. der bereits erstellten Schicht der dreidimensionalen Struktur erstreckt. Mit anderen Worten, es wird eine Rohstoffpulverschicht erzeugt, deren Form im Wesentlichen an die Form der gekrümmten Basisebene bzw. der bereits erstellten Schicht der dreidimensionalen Struktur angepasst ist. Ferner wird die Rohstoffpulverschicht mit Hilfe des Glättungsschiebers auf eine gewünschte Höhe nivelliert. Die Einstellung einer gewünschten Höhe der Rohstoffpulverschicht erfolgt durch entsprechende Einstellung des Abstands der Glättungsfläche des Glättungsschiebers von der gekrümmten Basisebene bzw. der bereits erstellten Schicht der dreidimensionalen Struktur.

Die Bewegung des Glättungsschiebers über die gekrümmte Basisebene bzw. die bereits erstellte Schicht der dreidimensionalen Struktur kann auf verschiedene Art und Weise gesteuert werden. Beispielsweise ist es denkbar, die Bewegung des Glättungsschiebers über die gekrümmte Basisebene bzw. die bereits erstellte Schicht der dreidimensionalen Struktur mittels einer geeigneten von einer elektronischen Steuereinheit gesteuerten Antriebseinheit zu realisieren. Je nach Form der gekrümmten Basisebene bzw. der bereits erstellten Schicht der dreidimensionalen Struktur sind jedoch auch mechanische Lösungen zur Realisierung der gewünschten Bewegung des Glättungsschiebers über die gekrümmte Basisebene bzw. die bereits erstellte Schicht der dreidimensionalen Struktur denkbar.

Die geglättete Rohstoffpulverschicht wird schließlich mit elektromagnetischer Strahlung oder Teilchenstrahlung beaufschlagt. Insbesondere kann die geglättete Rohstoffpulverschicht von einem Laser, insbesondere einem fokussierten Laser, mit Laserstrahlung beaufschlagt werden. Vorzugsweise wird ein elektromagnetischer Strahl oder Teilchenstrahl derart über die Rohstoffpulverschicht geführt, dass die Rohstoffpulverschicht ortselektiv mit elektromagnetischer Strahlung oder Teilchenstrahlung beaufschlagt wird. Der durch die Beaufschlagung mit elektromagnetischer Strahlung oder Teilchenstrahlung verursachte Wärmeeintrag in die Rohstoffpulverschicht bewirkt, dass die einzelnen Partikel des Rohstoffpulvers in der Rohstoffpulverschicht miteinander verschmelzen bzw. versintern und dadurch ein schichtweiser Werkstückaufbau erfolgt.

Das erfindungsgemäße Verfahren ermöglicht den Aufbau einer dreidimensionalen Struktur mittels eines generativen Schichtbauverfahrens auf einer gekrümmten Basisebene. Die Einsatzmöglichkeiten generativer Schichtbauverfahren zur Herstellung von komplex geformten Bauteilen werden dadurch beträchtlich erweitert. Insbesondere eignet sich das erfindungsgemäße Verfahren zur Herstellung eines Formelements, das zur Verwendung bei der Herstellung rotationssymmetrischer Bauteile geeignet ist. Beispielsweise kann das Verfahren zur Herstellung eines Vulkanisationsformsegments eingesetzt werden, das zur Verwendung bei der Herstellung von Reifen geeignet ist.

Grundsätzlich ist es bei dem erfindungsgemäßen Verfahren möglich, die Pulverauftragvorrichtung unabhängig von der gekrümmten Form der Basisebene bzw. der bereits erstellten Schicht der dreidimensionalen Struktur über die Basisebene bzw. die bereits erstellte Schicht der dreidimensionalen Struktur zu führen, d.h. die Pulverauftragvorrichtung beispielsweise in einer horizontalen Ebene über die gekrümmte Basisebene bzw. die bereits erstellte Schicht der dreidimensionalen Struktur zu führen. Die Anpassung der Form der auf die gekrümmte Basisebene bzw. die bereits erstellte Schicht der dreidimensionalen Struktur aufgebrachten Rohstoffpulverschicht an die gekrümmte Form der Basisebene bzw. der bereits erstellten Schicht der dreidimensionalen Struktur erfolgt dann ausschließlich mittels des Glättungsschiebers. Alternativ dazu ist es jedoch auch denkbar, die Pulverauftragvorrichtung derart über die gekrümmte Basisebene bzw. die bereits erstellte Schicht der dreidimensionalen Struktur zu führen, dass die Rohstoffpulverauslassöffnung der Pulverauftragvorrichtung parallel zu der gekrümmten Basisebene bzw. der bereits erstellten Schicht der dreidimensionalen Struktur bewegt wird. Bei einer derartigen Ausgestaltung des erfindungsgemäßen Verfahrens erfolgt bereits das Auftragen der Rohstoffpulverschicht auf die gekrümmte Basisebene bzw. die bereits erstellte Schicht der dreidimensionalen Struktur in einer an die gekrümmte Form der Basisebene bzw. der bereits erstellten Schicht der dreidimensionalen Struktur angepassten Weise.

Die über die Rohstoffpulverschicht streichende Glättungsfläche des Glättungsschiebers kann entlang eines Kreisbahnsegments bewegt werden, dessen Radius an einem Krümmungsradius der gekrümmten Basisebene bzw. der bereits erstellten Schicht der dreidimensionalen Struktur angepasst ist. Zusätzlich oder alternativ dazu kann die Rohstoffpulverauslassöffnung der Pulverauftragvorrichtung entlang eines Kreisbahnsegments bewegt werden, dessen Radius an einen Krümmungsradius der gekrümmten Basisebene bzw. der bereits erstellten Schicht der dreidimensionalen Struktur angepasst ist. Mittels eines derart ausgestalteten Verfahrens kann eine dreidimensionale Struktur auf einer kreissegmentförmigen Basisebene erzeugt werden.

Wenn sowohl der Glättungsschieber als auch die Rohstoffpulverauslassöffnung der Pulverauftragvorrichtung bei ihrer Bewegung über die gekrümmte Basisebene bzw. die bereits erstellte Schicht der dreidimensionalen Struktur ein Kreisbahnsegment beschreiben, ist eine simultane Bewegung der Pulverauslassöffnung und des Glättungsschiebers möglich, wobei der Glättungsschieber bezogen auf die Bewegungsrichtung des Glättungsschiebers und der Rohstoffpulverauslassöffnung vorzugsweise stets hinter der Rohstoffpulverauslassöffnung angeordnet ist, um das aus der Rohstoffpulverauslassöffnung austretende Rohstoffpulver entsprechend glatt streichen zu können. Alternativ dazu können der Glättungsschieber und die Rohstoffpulverauslassöffnung der Pulverauftragvorrichtung auch unabhängig voneinander entlang eines Kreisbahnsegments bewegt werden, wobei dann vorzugsweise zunächst die Rohstoffpulverauslassöffnung über die gekrümmte Basisebene bzw. die bereits erstellte Schicht der dreidimensionalen Struktur bewegt und anschließend die auf die gekrümmte Basisebene bzw. die bereits erstellte Schicht der dreidimensionalen Struktur aufgetragene Rohstoffpulverschicht mittels des der Rohstoffpulverauslassöffnung nachgeführten Glättungsschiebers glatt gestrichen wird.

Die Glättungsfläche des Glättungsschiebers kann durch mindestens einen schwenkbar gelagerten und mit dem Glättungsschieber verbundenen Schwingarm entlang des Kreisbahnsegments bewegt werden, dessen Radius an den Krümmungsradius der gekrümmten Basisebene bzw. der bereits erstellten Schicht der dreidimensionalen Struktur angepasst ist. Zusätzlich oder alternativ dazu kann die Rohstoffpulverauslassöffnung der Pulverauftragvorrichtung durch mindestens einen schwenkbar gelagerten und mit der Pulverauftragvorrichtung verbundenen Schwingarm entlang des Kreisbahnsegments bewegt werden, dessen Radius an den Krümmungsradius der gekrümmten Basisebene bzw. der bereits erstellten Schicht der dreidimensionalen Struktur angepasst ist. Mit Hilfe eines Schwingarms kann eine ein Kreisbahnsegment beschreibende Bewegung der Glättungsfläche des Glättungsschiebers und/oder der Rohstoffpulverauslassöffnung der Pulverauftragvorrichtung besonders einfach mit Hilfe wenig fehleranfälliger mechanischer Komponenten realisiert werden.

Der Schwingarm kann von einer geeigneten Antriebseinrichtung, beispielsweise einem Elektromotor angetrieben werden. Falls erforderlich, kann zwischen der Antriebseinrichtung und dem Schwingarm ein Getriebe angeordnet sein, das geeignet ist, eine Antriebsbewegung der Antriebseinrichtung in die gewünschte Schwenkbewegung des Schwingarms umzusetzen. Der Glättungsschieber und die Pulverauftragvorrichtung können mit dem selben Schwingarm verbunden sein. Beispielsweise kann eine unmittelbare Verbindung zwischen der Pulverauftragvorrichtung und dem Schwingarm vorgesehen und der Glättungsschieber benachbart zu der Rohstoffpulverauslassöffnung der Pulverauftragvorrichtung an der Pulverauftragvorrichtung angebracht sein. Alternativ dazu ist es jedoch auch möglich, den Glättungsschieber und die Pulverauftragvorrichtung an separat voneinander ausgebildeten Schwingarmen zu befestigen.

Insbesondere dann, wenn die Pulverauftragvorrichtung, wie oben beschrieben, unmittelbar mit dem Schwingarm verbunden und der Glättungsschieber an der Pulverauftragvorrichtung angebracht ist, ist die Pulverauftragvorrichtung vorzugsweise mit zwei Rohstoffpulverauslassöffnungen versehen und der Glättungsschieber zwischen den beiden Rohstoffpulverauslassöffnungen positioniert. Wenn die Pulverauftragvorrichtung an einer ersten Richtung über die gekrümmte Basisebene bzw. die bereits erstellte Schicht der dreidimensionalen Struktur bewegt wird, kann dann die Rohstoffpulverauslassöffnung zum Auftragen von Rohstoffpulver auf die gekrümmte Basisebene genutzt werden, die bezogen auf die Bewegungsrichtung der Pulverauftragvorrichtung über die Basisebene bzw. die bereits erstellte Schicht der dreidimensionalen Struktur vor dem Glättungsschieber positioniert ist. Die Rohstoffpulverauslassöffnung, die bezogen auf die Bewegungsrichtung der Pulverauftragvorrichtung über die gekrümmte Basisebene bzw. die bereits erstellte Schicht der dreidimensionalen Struktur hinter dem Glättungsschieber angeordnet ist, ist dann vorzugsweise mittels einer geeigneten Verschlussvorrichtung verschlossen.

In ähnlicher Weise wird auch dann, wenn die Pulverauftragvorrichtung in einer der ersten Richtung entgegengesetzten zweiten Richtung über die gekrümmte Basisebene bzw. die bereits erstellte Schicht der dreidimensionalen Struktur bewegt wird, wiederum vorzugsweise die Rohstoffpulverauslassöffnung zum Auftragen einer Rohstoffpulverschicht auf die gekrümmte Basisebene bzw. die bereits erstellte Schicht der dreidimensionalen Struktur genutzt, die bezogen auf die Bewegungsrichtung der Pulverauftragvorrichtung vor dem Glättungsschieber angeordnet ist. Die bezogen auf die Bewegungsrichtung der Pulverauftragvorrichtung hinter dem Glättungsschieber positionierte Rohstoffpulverauslassöffnung ist dagegen wiederum vorzugsweise mittels einer geeigneten Verschlussvorrichtung verschlossen.

Durch eine derartige Ausgestaltung des erfindungsgemäßen Verfahren wird sichergestellt, dass die von der Pulverauftragvorrichtung auf die gekrümmte Basisebene bzw. die bereits erstellte Schicht der dreidimensionalen Struktur aufgetragene Rohstoffpulverschicht mittels des Glättungsschiebers stets ausreichend geglättet und auf eine gewünschte Hohe nivelliert wird. Gleichzeitig werden Leerfahrten der Pulverauftragvorrichtung vermieden, da es sowohl bei einer Bewegung der Pulverauftragvorrichtung über die gekrümmte Basisebene bzw. die bereits erstellte Schicht der dreidimensionalen Struktur in der ersten Richtung als auch bei einer Bewegung der Pulverauftragvorrichtung über die gekrümmte Basisebene bzw. die bereits erstellte Schicht der dreidimensionalen Struktur in der der ersten Richtung entgegengesetzten zweiten Richtung möglich ist, Pulver auf die gekrümmte Basisebene aufzutragen und mittels des Glättungsschiebers zu glätten.

Der Radius des Kreisbahnsegments, das die Glättungsfläche des Glättungsschiebers und/oder die Rohstoffpulverauslassöffnung der Pulverauftragvorrichtung beschreibt/beschreiben kann durch eine Einstellung der Länge des Schwingarms festgelegt werden. Insbesondere kann der Radius des Kreisbahnsegments durch eine Vergrößerung der Länge des Schwingarms vergrößert und durch eine Verkleinerung der Länge des Schwingarms verkleinert werden. Um sicherzustellen, dass die Glättungsfläche des Glättungsschiebers und/oder die Rohstoffpulverauslassöffnung der Pulverauftragvorrichtung bei einer Variation der Länge des Schwingarms in einem konstanten Abstand von der gekrümmten Basisebene gehalten wird/werden, erfolgt bei einer Veränderung der Länge des Schwingarms vorzugsweise eine entsprechende Positionierung einer Lagereinrichtung zur schwenkbaren Lagerung des Schwingarms relativ zu der gekrümmten Basisebene. Bei einer Verlängerung des Schwingarms wird die Lagereinrichtung vorzugsweise in einem größeren Abstand von der gekrümmten Basisebene positioniert. Eine Verringerung der Länge des Schwingarms ist vorzugsweise mit einer Verringerung des Abstands der Lagereinrichtung von der gekrümmten Basisebene verbunden.

Der Fokus eines elektromagnetischen Strahls oder eines Teilchenstrahls, der bei dem erfindungsgemäßen Verfahren zur vorzugsweise ortselektiven Beaufschlagung der geglätteten Rohstoffpulverschicht mit elektromagnetischer Strahlung oder Teilchenstrahlung über die auf die gekrümmte Basisebene bzw. die bereits erstellte Schicht der dreidimensionalen Struktur aufgetragene Rohstoffpulverschicht geführt wird, erfährt durch die gekrümmte Form der Basisebene bzw. der bereits erstellten Schicht der dreidimensionalen Struktur und folglich der Rohstoffpulverschicht zwangsläufig eine ortsabhängige Formveränderung. Wenn eine besonders hohe Präzision bei der Beaufschlagung der Rohstoffpulverschicht mit elektromagnetischer Strahlung oder Teilchenstrahlung erforderlicht ist, kann der Fokus des elektromagnetischen Strahls oder des Teilchenstrahls vorzugsweise kontinuierlich derart nachjustiert werden, dass einer Formvariation des Fokus bei einer Bewegung des Fokus über die gekrümmte Basisebene bzw. die bereits erstellte Schicht der dreidimensionalen Struktur entgegengewirkt wird.

Alternativ oder zusätzlich dazu kann bei dem erfindungsgemäßen Verfahren eine Fokusebene, in der ein Fokus eines elektromagnetischen Strahls oder eines Teilchenstrahls liegt, bei einer Bewegung des Fokus über die gekrümmte Basisebene vorzugsweise kontinuierlich an die Form der gekrümmten Basisebene angepasst werden. Beispielsweise kann der Fokus des elektromagnetischen Strahls oder des Teilchenstrahls so gesteuert werden, dass die Fokusebene bei einer Bewegung des Fokus über die gekrümmte Basisebene in einem gleichbleibenden Abstand von einer auf der gekrümmten Basisebene bzw. einer bereits erstellten Schicht der dreidimensionalen Struktur aufgebrachten Pulverschicht liegt. Vorzugsweise erfolgt die Steuerung des Fokus derart, dass die Fokusebene im Bereich der Oberfläche der Pulverschicht liegt.

Insbesondere dann, wenn das erfindungsgemäße Verfahren zur Herstellung eines zur Verwendung bei der Reifenherstellung geeigneten Vulkanisationsformsegments zum Einsatz kommt, wird die gekrümmte Basisebene vorzugsweise von mindestens einer Begrenzungswand begrenzt, die sich von der gekrümmten Basisebene in einem Winkel erstreckt, der größer ist als 90°. Mit anderen Worten, die Begrenzungswand ist relativ zu der gekrümmten Basisebene schräg nach außen geneigt. Der Glättungsschieber wird dann bei seiner Bewegung parallel zu der gekrümmten Basisebene zumindest beim Zusammenwirken mit einem an die gekrümmte Basisebene angrenzenden Abschnitt der Begrenzungswand elastisch verformt. Der Glättungsschieber ist also vorzugsweise so geformt und besteht aus einem derartig elastisch verformbaren Material, beispielsweise einem Silikonmaterial, dass der Glättungsschieber auch Pulverschichten, die bereits in einem gewissen Abstand von der Basisebene angeordnet sind, im Wesentlichen ganzflächig überstreichen und glätten kann.

Eine erfindungsgemäße Vorrichtung zur Herstellung einer dreidimensionalen Struktur auf einer gekrümmten Basisebene durch Beaufschlagen von Pulverschichten mit elektromagnetischer Strahlung oder Teilchenstrahlung umfasst eine Pulverauftragvorrichtung zum Auftragen einer Rohstoffpulverschicht auf die gekrümmte Basisebene bzw. eine bereits erstellte Schicht der dreidimensionalen Struktur. Ferner ist ein Glättungsschieber zum Glätten der auf die gekrümmte Basisebene bzw. die bereits erstellte Schicht der dreidimensionalen Struktur aufgetragenen Rohstoffpulverschicht vorhanden, der dazu eingerichtet ist, mittels einer Führungseinrichtung derart über die Rohstoffpulverschicht geführt zu werden, dass eine über die Rohstoffpulverschicht streichende Glättungsfläche des Glättungsschiebers parallel zu der gekrümmten Basisebene bzw. der bereits erstellten Schicht der dreidimensionalen Struktur bewegt wird. Schließlich umfasst die erfindungsgemäße Vorrichtung eine Bestrahlungsvorrichtung zur Beaufschlagung der geglätteten Rohstoffpulverschicht mit elektromagnetischer Strahlung oder Teilchenstrahlung.

Vorzugsweise ist die Pulverauftragvorrichtung dazu eingerichtet, mittels einer Führungseinrichtung derart über die gekrümmte Basisebene bzw. die bereits erstellte Schicht der dreidimensionalen Struktur geführt zu werden, dass eine Rohstoffpulverauslassöffnung der Pulverauftragvorrichtung parallel zu der gekrümmten Basisebene bzw. der bereits erstellten Schicht der dreidimensionalen Struktur bewegt wird. Der Glättungsschieber und die Pulverauftragvorrichtung können mittels der gleichen Führungseinrichtung über die gekrümmte Basisebene bzw. die bereits erstellte Schicht der dreidimensionalen Struktur geführt werden. Alternativ dazu ist jedoch auch der Einsatz zweier separater Führungseinrichtungen zur Führung der Bewegung der Pulverauftragvorrichtung und des Glättungsschiebers denkbar.

Die Führungseinrichtung(en) zur Führung der Bewegung der Glättungsfläche des Glättungsschiebers und/oder der Rohstoffpulverauslassöffnung der Pulverauftragvorrichtung ist/sind vorzugsweise dazu eingerichtet, die Glättungsfläche des Glättungsschiebers und/oder die Rohstoffpulverauslassöffnung der Pulverauftragvorrichtung entlang eines Kreisbahnsegments zu bewegen, dessen Radius an einen Krümmungsradius der gekrümmten Basisebene bzw. der bereits erstellten Schicht der dreidimensionalen Struktur angepasst ist.

Die Führungseinrichtung(en) zur Führung der Bewegung der Glättungsfläche des Glättungsschiebers und/oder der Rohstoffpulverauslassöffnung der Pulverauftragvorrichtung kann mindestens einen schwenkbar gelagerten und mit dem Glättungsschieber und/oder der Pulverauftragvorrichtung verbundenen Schwingarm umfassen.

Die Führungseinrichtung(en) zur Führung der Bewegung der Glättungsfläche des Glättungsschiebers und/oder der Rohstoffpulverauslassöffnung der Pulverauftragvorrichtung kann/können eine Einstelleinrichtung zur Einstellung der Länge des Schwingarms umfassen. Durch eine entsprechende Variation der Länge des Schwingarms kann der Radius des Kreisbahnsegments variiert werden, das die Glättungsfläche des Glättungsschiebers und/oder die Rohstoffpulverauslassöffnung der Pulverauftragvorrichtung beschreibt/beschreiben. Ferner kann eine Lagereinrichtung zur schwenkbaren Lagerung des Schwingarms derart in verschiedenen Positionen relativ zu der gekrümmten Basisebene positionierbar sein, dass die Glättungsfläche des Glättungsschiebers und/oder die Rohstoffpulverauslassöffnung der Pulverauftragvorrichtung bei einer Variation der Länge des Schwingarms in einem konstanten Abstand von der gekrümmten Basisebene gehalten werden kann/können.

Die Bestrahlungseinrichtung kann eine Justierungseinrichtung umfassen, die dazu eingerichtet ist, einen Fokus eines elektromagnetischen Strahls oder eines Teilchenstrahls derart vorzugsweise kontinuierlich nachzujustieren, dass einer Vergrößerung des Fokus bei einer Bewegung des Fokus über die gekrümmte Basisebene bzw. die bereits erstellte Schicht der dreidimensionalen Struktur entgegengewirkt wird.

Alternativ oder zusätzlich dazu kann die Bestrahlungseinrichtung eine Anpassungsseinrichtung umfassen, die dazu eingerichtet ist, bei dem erfindungsgemäßen Verfahren eine Fokusebene, in der ein Fokus eines elektromagnetischen Strahls oder eines Teilchenstrahls liegt, bei einer Bewegung des Fokus über die gekrümmte Basisebene vorzugsweise kontinuierlich an die Form der gekrümmten Basisebene anzupassen.

Die gekrümmte Basisebene kann von mindestens einer Begrenzungswand begrenzt werden, die sich von der gekrümmten Basisebene in einem Winkel erstreckt, der größer ist als 90°. Ferner kann der Glättungsschieber aus einem Material bestehen und derart geformt sein, dass der Glättungsschieber bei der Bewegung des Glättungsschiebers parallel zu der gekrümmten Basisebene zumindest beim Zusammenwirken mit einem an die gekrümmte Basisebene angrenzenden Abschnitt der Begrenzungswand eine elastische Verformung erfährt.

Ein erfindungsgemäßes, zur Verwendung bei der Herstellung von rotationssymmetrischen Bauteilen geeignetes Formelement umfasst eine Pressfläche sowie eine auf der Pressfläche vorgesehene Negativstruktur. Bei dem erfindungsgemäßen Formelement ist zumindest die auf der Pressfläche des Formelements vorgesehene Negativstruktur mittels eines oben beschriebenen Verfahrens und/oder mittels einer oben beschriebenen Vorrichtung zur Herstellung einer dreidimensionalen Struktur auf einer gekrümmten Basisebene durch Beaufschlagen von Pulverschichten oder mit elektromagnetischer Strahlung oder Teilchenstrahlung hergestellt. Die Negativstruktur des erfindungsgemäßen Formelements kann beispielsweise eine Vielzahl von ggf. auch komplex geformten oder mit Hinterschneidungen versehenen Lamellen umfassen.

Grundsätzlich ist es möglich, das gesamte Formelement, d.h. eine die Pressfläche tragende Grundstruktur, die Pressfläche begrenzende Seitenwände und die auf der Pressfläche vorgesehene Negativstruktur mittels des erfindungsgemäßen generativen Schichtaufbauverfahrens und/oder mittels der erfindungsgemäßen Vorrichtung zur Durchführung eines generativen Schichtaufbauverfahrens zu fertigen. Da insbesondere ein bei der Herstellung von großvolumigen rotationssymmetrischen Bauteilen einsetzbares Formelement ein relativ großes Bauvolumen aufweist, ist die Bauzeit für das Formelement durch generativen Schichtaufbau jedoch sehr lang und kann ggf. sogar mehrere Tage umfassen. Die Negativstruktur, die auf die Pressfläche des Formelements aufzubringen ist, weist dagegen ein deutlich kleineres Bauvolumen auf als das gesamte Formelement. Darüber hinaus ist insbesondere diese Negativstruktur besonders komplex geformt. Es bietet sich daher an, bei dem erfindungsgemäßen Formelement lediglich die auf der Pressfläche des Formelement vorgesehene Negativstruktur eines Reifenprofils mittels des erfindungsgemäßen Schichtaufbauverfahrens und/oder mittels der erfindungsgemäßen Vorrichtung zur Durchführung eines generativen Schichtaufbauverfahrens herzustellen. Das Formelement kann zum Beispiel in Form eines Vulkanisationsformsegments ausgebildet sein, das zur Verwendung bei der Herstellung von Reifen, insbesondere Automobilreifen, geeignet ist.

Um einen Formelementrohling im Bereich seiner Pressfläche mit einer Negativstruktur zu versehen, kann der Formelementrohling, der eine die gekrümmte Pressfläche tragende Grundstruktur sowie zwei einander gegenüberliegende, die Pressfläche begrenzende Seitenwände umfassen kann, auf einem Träger der erfindungsgemäßen Vorrichtung zur Herstellung einer dreidimensionalen Struktur auf einer gekrümmten Basisebene durch Beaufschlagen von Pulverschichten mit elektromagnetischer Strahlung oder Teilchenstrahlung befestigt werden. Die gekrümmte Basisebene wird dann durch die Pressfläche des Formelementrohlings gebildet. Auf der Pressfläche des Formelementrohlings kann dann unmittelbar, wie oben beschrieben, mittels des erfindungsgemäßen generativen Schichtaufbauverfahrens die Negativstruktur erzeugt werden. Alternativ dazu ist es denkbar, die erfindungsgemäße Vorrichtung mit einem Träger zu versehen, der eine die gekrümmte Basisebene definierende gekrümmte Oberfläche aufweist. Die Negativstruktur kann dann als separates Bauteil auf dem Träger der erfindungsgemäßen Vorrichtung erzeugt und anschließend mit der Pressfläche des Formelementrohlings verbunden werden.

Ein erfindungsgemäßes rotationssymmetrisches Bauteil ist unter Verwendung eines oben beschriebenen Formelements hergestellt. Das rotationssymmetrische Bauteil kann beispielsweise ein Reifen, insbesondere ein Automobilreifen sein.

Eine bevorzugte Ausführungsform der Erfindung wird nun anhand der beigefügten, schematischen Zeichnungen näher erläutert von denen
- Figur 1: eine dreidimensionale Darstellung eines zur Verwendung bei der Herstellung von Automobilreifen geeigneten Vulkanisationsformsegments zeigt,
- Figur 2: eine Querschnittsansicht des Vulkanisationsformsegments gemäß Figur 1 zeigt,
- Figur 3: eine Lasersintervorrichtung zur Herstellung einer dreidimensionalen Struktur auf einer gekrümmten Basisebene durch Beaufschlagen von Pulverschichten mit Laserstrahlung zeigt,
- Figuren 4a bis 4f: die Bewegung einer Glättungsfläche eines Glättungsschiebers und einer Rohstoffpulverauslassöffnung einer Pulverauftragvorrichtung der Vorrichtung gemäß Figur 3 über eine gekrümmte Basisebene in einer ersten Richtung veranschaulichen, wobei die gekrümmte Basisebene durch eine Pressfläche eines auf einem absenkbaren Träger der Vorrichtung gemäß Figur 3 befestigten Vulkanisationsformsegmentrohlings gebildet wird,
- Figuren 5a bis 5f: eine Bewegung der Glättungsfläche des Glättungsschiebers und der Rohstoffpulverauslassöffnung der Pulverauftragvorrichtung über die gekrümmte Basisebene in einer der ersten Richtung entgegengesetzte zweite Richtung veranschaulichen,
- Figuren 6a bis 6c: das Kreisbahnsegment veranschaulichen, das die Glättungsfläche des Glättungsschiebers und die Rohstoffpulverauslassöffnung der Pulverauftragvorrichtung bei ihrer Bewegung über die gekrümmte Basisebene beschreiben,
- Figur 7: die in den Figuren 4a bis 4f und 5a bis 5f gezeigte Anordnung nach einem Absenken des absenkbaren Trägers der Vorrichtung gemäß Figur 3 zeigt,
- Figuren 8a und 8b: die Anordnung gemäß Figur 7 nach dem Erzeugen einer Reifenprofil-Negativstruktur auf der Pressfläche des Vulkanisationsformsegmentrohlings beim schrittweisen Anheben des Trägers zeigen,
- Figuren 9a bis 9c: die Festlegung des Radius des Kreisbahnsegments, das die Glättungsfläche des Glättungsschiebers und die Rohstoffpulverauslassöffnung der Pulverauftragvorrichtung beschreiben, durch Einstellung der Länge eines Schwingarms und entsprechende Positionierung einer Lagereinrichtung zur schwenkbaren Lagerung des Schwingarms relativ zu der gekrümmten Basisebene veranschaulichen und
- Figuren 10a bis: 10b das Kreisbahnsegment veranschaulichen, das die Glättungsfläche des Glättungsschiebers und die Rohstoffpulverauslassöffnung der Pulverauftragvorrichtung nach der Festlegung des Radius des Kreisbahnsegments gemäß den Figuren 9a bis 9c veranschaulichen.

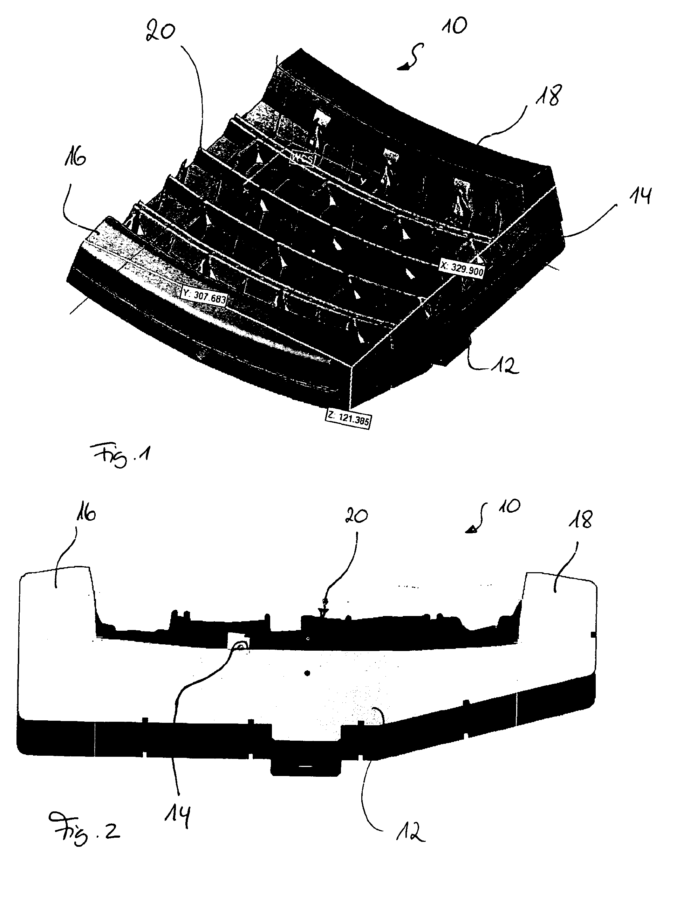

Die Figuren 1 und 2 zeigen ein Vulkanisationsformsegment 10, das zum Einsatz bei der Herstellung von Automobilreifen vorgesehen ist. Das gezeigte Formsegment 10 ist in Form eines 1/12-Segments ausgebildet, d.h. eine komplette Vulkanisationsform, die geeignet ist, einen zu vulkanisierenden Automobilreifen vollständig aufzunehmen, setzt sich aus zwölf in den Figuren 1 und 2 gezeigten Formsegmenten 10 zusammen. Es versteht sich, dass es auch möglich ist, Vulkanisationsformen zur Verwendung bei der Herstellung von Automobilreifen aus einer kleineren oder einen größeren Anzahl von Formsegmenten auszubilden. Beispielsweise können Vulkanisationsformen auch aus neun Formsegmenten zusammengesetzt sein.

Das in den Figuren 1 und 2 veranschaulichte Vulkanisationsformsegment 10 umfasst eine Grundstruktur 12 mit einer Pressfläche 14, die dazu vorgesehen ist, bei der Verwendung des Vulkanisationsformsegments 10 bei der Herstellung eines Automobilreifens mit einem mit einem Profil zu versehenden Laufstreifen des Reifens zusammenzuwirken. Die Pressfläche 14 wird von zwei einander gegenüberliegenden Begrenzungswänden 16, 18 begrenzt. Wie insbesondere aus Figur 2 ersichtlich wird, erstrecken sich die Begrenzungswände 16, 18 jeweils in einem Winkel relativ zu der Pressfläche 14, der größer ist als 90°, d.h. der Pressfläche 14 zugewandte Innenflächen der Begrenzungswände 16, 18 sind relativ zu der Pressfläche 14 schräg nach außen geneigt. Mit zunehmendem Abstand von der Pressfläche 14 vergrößert sich somit der Abstand der Innenflächen der Begrenzungswände 16, 18 voneinander.

Die Pressfläche 14 des Vulkanisationsformsegments 10 ist mit einer Negativstruktur 20 eines Reifenprofils versehen. Ein mit Hilfe einer aus zwölf Vulkanisationsformsegmenten 10 zusammengesetzten Vulkanisationsform vulkanisierter Automobilreifen wird durch das Zusammenwirken dieser Reifenprofil-Negativstruktur 20 mit dem Laufstreifen des zu vulkanisierenden Reifens mit dem gewünschten Profil versehen. Wie insbesondere in Figur 1 zu erkennen ist, umfasst die sich von der Pressfläche 14 erstreckende Reifenprofil-Negativstruktur 20 eine Vielzahl komplex geformter Lamellen, die teilweise mit Hinterschneidungen versehen sind.

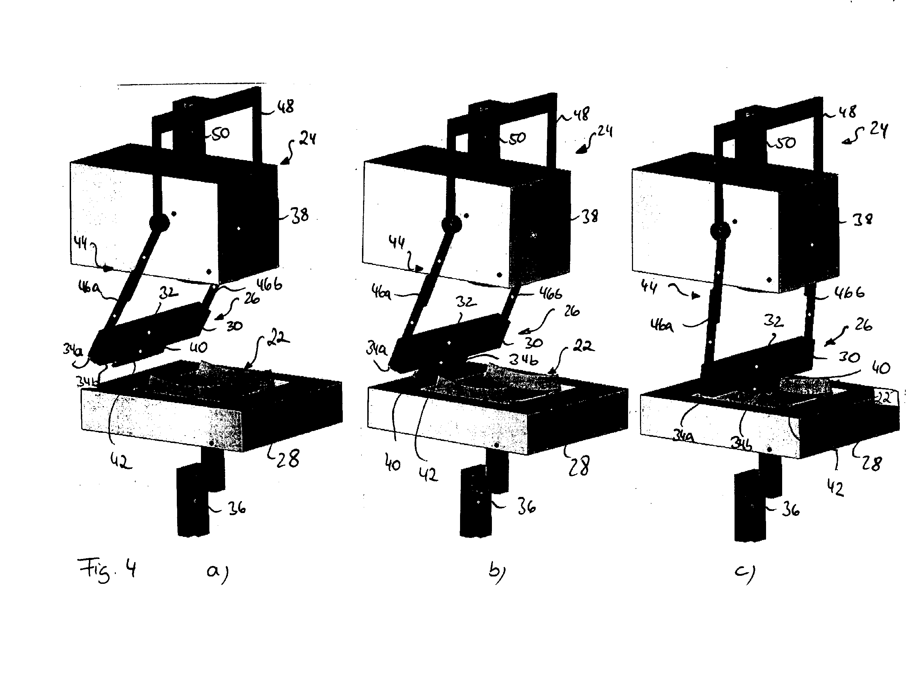

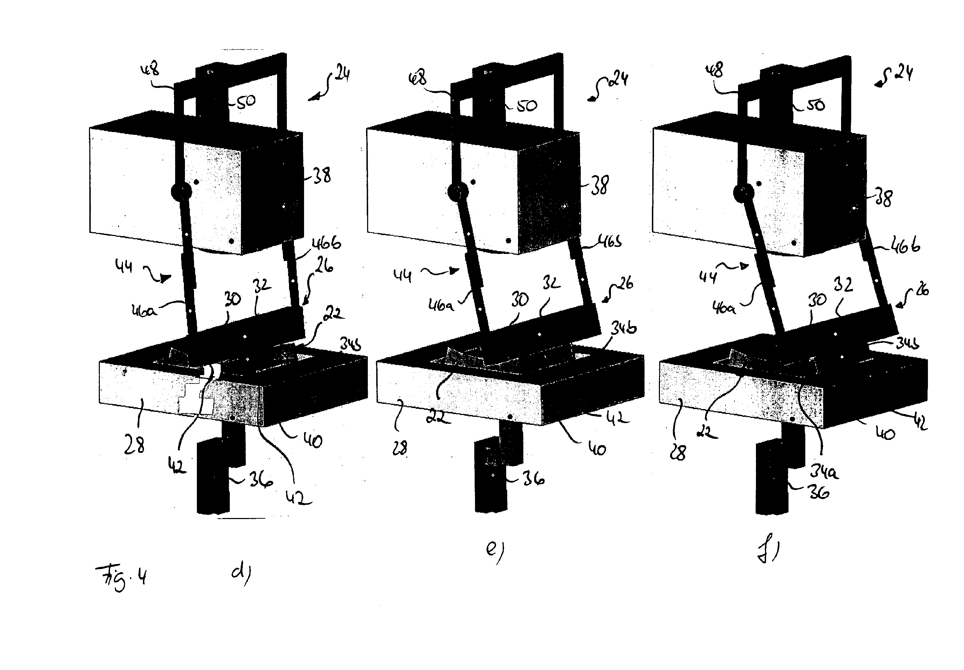

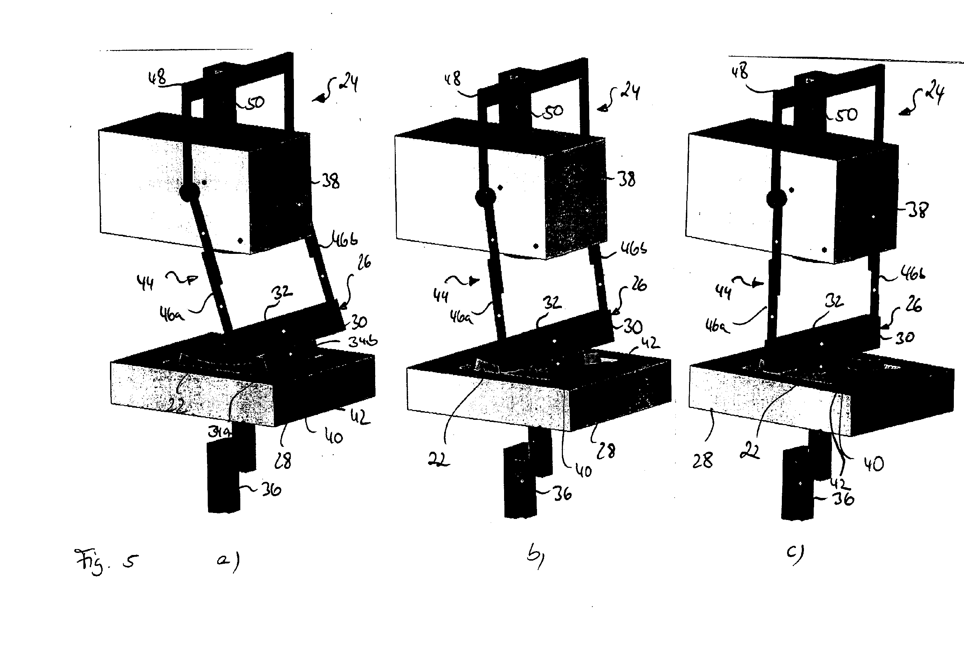

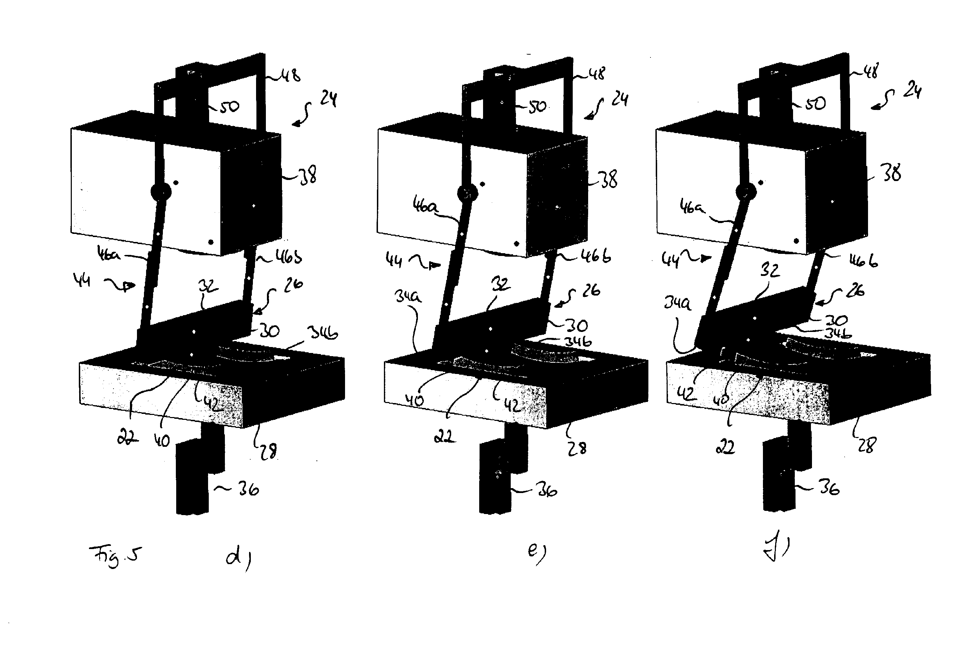

Das in den Figuren 1 und 2 gezeigte Vulkanisationsformsegment 10 wird hergestellt, indem zunächst ein Vulkanisationsformsegmentrohling 22 (siehe Figuren 4a bis f und 5a bis f) gefertigt wird, der aus der Grundstruktur 12 mit der Pressfläche 14 und den die Pressfläche 14 begrenzenden Begrenzungswänden 16, 18 besteht. Anschließend wird auf der Pressfläche 14 mittels eines im Folgenden erläuterten generativen Schichtaufbauverfahrens die Reifenprofil-Negativstruktur 20 erzeugt. Die Grundform des Vulkanisationsformsegmentrohlings 22 und insbesondere der Pressfläche 14 ist an die Form des mittels des Vulkanisationsformsegments 10 zu verarbeitenden Automobilreifens angepasst, d.h. die Form der zum Zusammenwirken mit einem Segment des Reifenlaufstreifens vorgesehene Pressfläche 14 kann als Kreisbahnsegment beschrieben werden, dessen Radius an den Radius des mittels des Vulkanisationsformsegments 10 zu verarbeitenden Automobilreifens angepasst ist. Die Pressfläche 14 bildet somit eine gekrümmte Basisebene, auf der mittels des generativen Schichtbauverfahrens die Reifenprofil-Negativstruktur 20 zu erstellen ist.

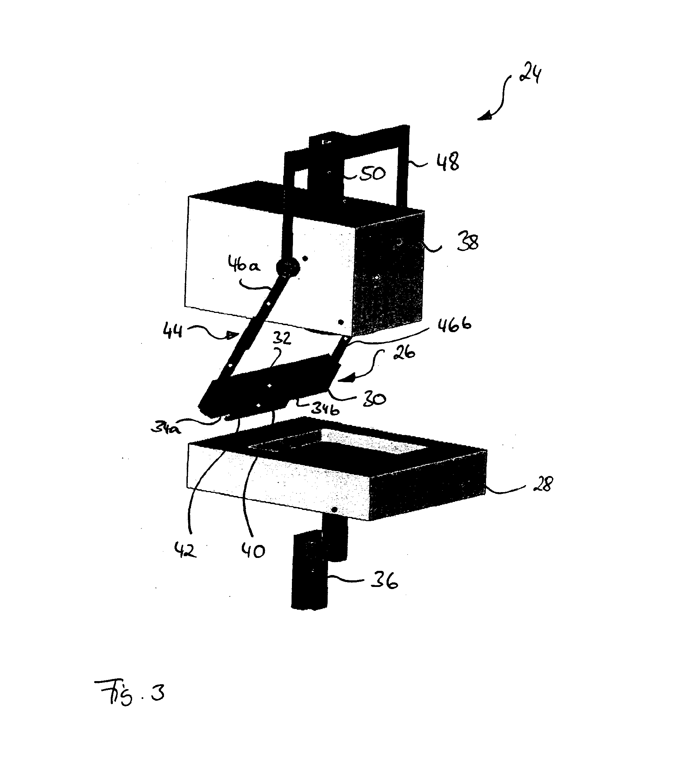

Figur 3 zeigt eine Vorrichtung 24, die dazu geeignet ist, auf dem Vulkanisationsformsegmentrohling 22 durch ein generatives Schichtbauverfahren, d.h. durch Beaufschlagen von Pulverschichten mit elektromagnetischer Strahlung oder Teilchenstrahlung die Reifenprofil-Negativstruktur 20 zu erzeugen. In dem gezeigten Ausführungsbeispiel ist die Vorrichtung 24 als Lasersintervorrichtung ausgeführt. Die in Figur 3 gezeigte Vorrichtung 24 umfasst eine Pulverauftragvorrichtung 26, die dazu dient, mit Laserstrahlung zu beaufschlagendes Rohstoffpulver auf einen Träger 28 aufzubringen. Die Pulverauftragvorrichtung 26 umfasst eine Pulverkammer 30 mit einer im Bereich einer Oberseite der Pulverkammer 30 angeordneten Pulvereinlassöffnung 32 sowie zwei im Bereich einer Unterseite der Pulverkammer 30 angeordneten Pulverauslassöffnungen 34a, 34b. Der Träger 28 ist mittels einer Hubvorrichtung 36 vertikal verschiebbar, so dass der Träger 28 mit zunehmender Bauhöhe eines schichtweise auf dem Träger 28 aufgebauten Werkstücks in vertikaler Richtung nach unten bewegt werden kann.

Darüber hinaus umfasst die Vorrichtung 24 eine Bestrahlungseinrichtung 38, durch die auf dem Träger 28 erzeugte Pulverschichten selektiv mit Laserstrahlung beaufschlagt werden können. Die Bestrahlungseinrichtung 38 umfasst einen fokussierten Laser, dessen Strahl ortsselektiv über die auf den Träger 28 aufgebrachte Rohstoffpulverschicht geführt werden kann. Durch den dabei in die Rohstoffpulverschicht eingebrachten Wärmeeintrag verschmelzen bzw. versintern einzelne Partikel des Rohstoffpulvers in der Rohstoffpulverschicht miteinander, wodurch ein schichtweiser Werkstückaufbau erfolgt.

An der Pulverauftragvorrichtung 26, d.h. an der Unterseite der Pulverkammer 30 ist ein aus einem Silikonmaterial bestehender Glättungsschieber 40 befestigt. Der Glättungsschieber 40 umfasst eine Glättungsfläche 42, die dazu vorgesehen ist, im Betrieb der Vorrichtung 24 über eine auf den Träger 28 bzw. eine bereits erstellte Schicht der Negativstruktur 20 aufgebrachte Rohstoffpulverschicht zu streichen, um die Rohstoffpulverschicht zu glätten und auf eine gewünschte Höhe zu regulieren. Der Glättungsschieber 40 ist zwischen den beiden im Bereich der Unterseite der Pulverkammer 30 vorgesehenen Pulverauslassöffnungen 34a, 34b positioniert.

Die Pulverauftragvorrichtung 26 mit dem an der Pulverauftragvorrichtung 26 befestigten Glättungsschieber 40 ist mit einer Führungseinrichtung 44 verbunden, die dazu dient, die Bewegung der Pulverauftragvorrichtung 26 und des Glättungsschiebers 40 über den Träger 28 zu führen. Die Führungseinrichtung 44 umfasst zwei Schwingarme 46a, 46b, deren erste Enden mit einander gegenüberliegenden Seitenflächen der Pulverauftragvorrichtung 26 verbunden sind. An ihren zweiten Enden sind die Schwingarme 46a, 46b schwenkbar an einer Gabel 48 angelenkt. Die Gabel 48 ist mittels einer weiteren Hubvorrichtung 50 vertikal verschiebbar. Ferner umfasst die Vorrichtung 24 eine in den Figuren nicht veranschaulichte Antriebseinrichtung, die beispielsweise in Form eines Elektromotors ausgebildet sein kann und dazu dient, die Führungseinrichtung 44 mit der Pulverauftragvorrichtung 26 und dem Glättungsschieber 40 über den Träger 28 zu bewegen. Bei Bedarf, kann zwischen die Antriebseinrichtung und die Führungseinrichtung 44 ein Getriebe geschaltet sein.

Der Träger 28, die Pulverauftragvorrichtung 26 mit dem Glättungsschieber 40 und ein Teil der Führungseinrichtung 44 sind innerhalb eines gegenüber der Umgebungsatmosphäre abgedichteten Prozessraumgehäuses angeordnet, das der besseren Übersichtlichkeit halber in den Figuren nicht veranschaulicht ist. Die Bestrahlungseinrichtung 38 kann ebenfalls innerhalb des Prozessraumgehäuses angeordnet, aber auch außerhalb des Prozessraumgehäuses positioniert sein. Mittels einer in den Figuren ebenfalls nicht veranschaulichten Schutzgaserzeugungseinrichtung kann einem Innenraum des Prozessraumgehäuses ein Schutzgas, beispielsweise Argon zugeführt werden. Durch die gegenüber der Außenatmosphäre abgedichtete Ausführung des Prozessraumgehäuses kann in dem Innenraum des Prozessraumgehäuses im Betrieb der Vorrichtung 24 eine Schutzgasatmosphäre aufrecht erhalten werden.

Zur Herstellung des Vulkanisationsformsegments 10 mittels der Vorrichtung 24 wird zunächst, wie in Figur 4a gezeigt, der Formsegmentrohling 22 auf dem Träger 28 der Vorrichtung 24 befestigt. Die Befestigung des Formsegmentrohlings 22 auf dem Träger 28 erfolgt derart, dass die Pressfläche 14 der Bestrahlungseinrichtung 38 sowie der Pulverauftragvorrichtung 26 und dem Glättungsschieber 40 zugewandt ist. Um eine Rohstoffpulverschicht auf die Pressfläche 14 aufzutragen, kann die Pulverauftragvorrichtung 26, wie in den Figuren 4a bis 4f gezeigt, über die Pressfläche 14 des auf dem Träger 28 befestigten Vulkanisationsformsegmentrohlings 22 bewegt werden. Die Bewegung der Pulverauftragvorrichtung 26 wird dabei mittels der Führungseinrichtung 44 derart gesteuert, dass die Pulverauslassöffnungen 34a, 34b der Pulverkammer 30 entlang eines Kreisbahnsegments über die Pressfläche 14 des Vulkanisationsformsegmentrohlings 22 geführt werden.

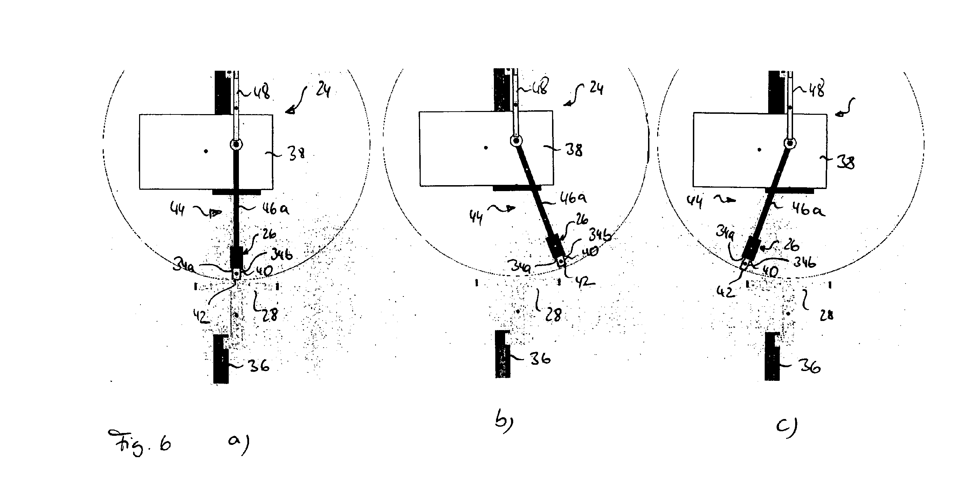

Bei einer Bewegung der Pulverauftragvorrichtung 26 in der in den Figuren 4a bis 4f veranschaulichten ersten Richtung ist die bezogen auf die der Bewegungsrichtung der Pulverauftragvorrichtung 26 vor dem Glättungsschieber 40 angeordnete Pulverauslassöffnung 34b geöffnet, die bezogen auf die Bewegungsrichtung der Pulverauftragvorrichtung 26 hinter dem Glättungsschieber 40 angeordnete Pulverauslassöffnung 34a dagegen mittels einer nicht näher veranschaulichten Verschlussvorrichtung verschossen. Dadurch wird sichergestellt, das Rohstoffpulver aus der Pulverkammer 30 ausschließlich über die Pulverauslassöffnung 34b auf die Pressfläche 14 des Formsegmentrohlings 20 aufgebracht wird. Die Glättungsfläche 42 des bezogen auf die Bewegungsrichtung der Pulverauftragvorrichtung 26 hinter der Pulverauslassöffnung 34b angeordneten Glättungsschiebers 40 streicht über die über die Pulverauslassöffnung 34b auf die Pressfläche 14 des Formsegmentrohlings 22 aufgetragene Rohstoffpulverschicht, wodurch diese geglättet und auf eine gewünschte Höhe nivelliert wird. Auch die Glättungsfläche 42 des Glättungsschiebers 40 beschreibt ein Kreisbahnsegment, dessen Radius an den Radius der Pressfläche 14 des Formsegmentrohlings 22 angepasst ist. Die von der Glättungsfläche 42 des Glättungsschiebers 40 beschriebene Bewegung entlang eines Kreisbahnsegments ist in den Figuren 6a bis c besonders deutlich zu erkennen. Der Glättungsschieber 40 wird folglich derart über die Rohstoffpulverschicht geführt, dass seine Glättungsfläche 42 parallel zu der eine gekrümmte Basisebene bildenden Pressfläche 14 des Formsegmentrohlings 22 bewegt wird.

Wie oben erläutert, sind die Begrenzungswände 16, 18 des Formsegmentsrohlings 22 relativ zu der Pressfläche 14 schräg nach außen geneigt. Der aus einem elastisch verformbaren Silikonmaterial bestehende Glättungsschieber 40 ist so geformt, dass er beim Zusammenwirken mit an die Pressfläche 40 angrenzenden Abschnitten der Begrenzungswände 16, 18 eine elastische Verformung erfährt. Der Glättungsschieber 40 wird dadurch nicht beschädigt, vielmehr wird durch die Ausgestaltung des Glättungsschiebers 40 sichergestellt, dass der Glättungsschieber 40 die auf die Pressfläche 14 des Formsegmentrohlings 22 bzw. eine bereits erstellte Schicht der Negativstruktur 20 aufgebrachten Rohstoffpulverschichten auch dann ganzflächig überstreicht, wenn der Träger 28, wie später erläutert werden wird, in einem späteren Stadium des Fertigungsprozesses zur Herstellung weiter von der Pressfläche 14 entfernt liegender Schichten der Negativstruktur 20vertikal nach unten abgesenkt wird.

Wenn sich die Pulverauftragvorrichtung 26 in der in Figur 4f gezeigten Stellung befindet, wird die auf die Pressfläche 14 aufgebrachte und mittels des Glättungsschiebers 40 geglättete Rohstoffpulverschicht von der Bestrahlungseinrichtung 38 selektiv mit Laserstrahlung beaufschlagt, um aus dem Rohstoffpulver eine erste Schicht der die Reifenprofil-Negativstruktur 20 zu formen. Der Fokus des Laserstrahls wird dabei von einer Justierungseinrichtung der Bestrahlungseinrichtung 38 kontinuierlich nachjustiert, um einer Vergrößerung des Fokus bei einer Bewegung des Fokus über die Pressfläche 14 entgegenzuwirken. Ferner sorgt eine Anpassungsseinrichtung der Bestrahlungseinrichtung 38 dafür, dass eine Fokusebene, in der der Fokus des Laserstrahls liegt, bei der Bewegung des Fokus über die gekrümmte Basisebene vorzugsweise kontinuierlich an die Form der gekrümmten Basisebene angepasst wird. Insbesondere wird der Fokus des Laserstrahls so gesteuert, dass die Fokusebene bei einer Bewegung des Fokus über die gekrümmte Basisebene stets im Bereich der Oberfläche der Pulverschicht liegt, die auf die gekrümmte Basisebene bzw. eine bereits erstellte Schicht der dreidimensionalen Struktur aufgebracht ist.

Anschließend wird der Träger 28 mit dem auf dem Träger 28 befestigten Formsegmentrohling 22 um die Höhe der erzeugten Reifenprofil-Negativstrukturschicht nach unten abgesenkt.

Im nächsten Schritt wird die Pulverauftragvorrichtung 26, wie in den Figuren 5a bis 5f gezeigt, in einer der ersten Richtung entgegengesetzten zweiten Richtung über die Pressfläche 14 bewegt. Bei einer Bewegung der Pulverauftragvorrichtung 26 über die Pressfläche 14 in der zweiten Richtung ist die bezogen auf die Bewegungsrichtung der Pulverauftragvorrichtung 26 hinter dem Glättungsschieber 40 positionierte Pulverauslassöffnung 34b mittels einer nicht näher veranschaulichten Verschlussvorrichtung verschlossen. Die bezogen auf die Bewegungsrichtung der Pulverauftragvorrichtung 26 vor dem Glättungsschieber 40 positionierte Pulverauslassöffnung 34a ist dagegen geöffnet, so dass Pulver aus der Pulverauslassöffnung 34a auf die Pressfläche 14 bzw. die bereits erzeugte Negativstrukturschicht aufgetragen werden kann. Wiederum sorgt die über die Rohstoffpulverschicht streichende Glättungsfläche 42 des Glättungsschiebers 40 für eine Glättung der Rohstoffpulverschicht und nivelliert die Rohstoffpulverschicht auf eine gewünschte Höhe.

Wenn sich die Pulverauftragvorrichtung 26 in der in Figur 5f veranschaulichten Position befindet, kann die neu erzeugte Rohstoffpulverschicht wiederum, wie oben erläutert, zur Erstellung der nächsten Reifenprofil-Negativstrukturschicht von der Bestrahlungseinrichtung 38 ortsselektiv mit Laserstrahlung beaufschlagt werden. Im Anschluss darin erfolgt wiederum eine Absenkung des Trägers 28 um die Höhe der erzeugten Reifenprofil-Negativstrukturschicht.

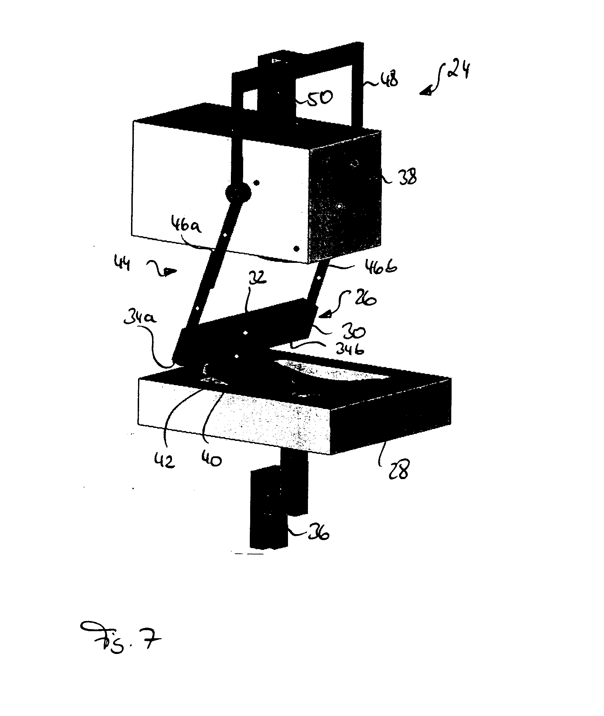

Figur 7 zeigt ein Stadium des Fertigungsprozesses, in dem der Träger 28 mit dem auf dem Träger befestigten Formsegmentrohling 22 bereits soweit abgesenkt ist, dass die Herstellung der obersten Schichten der Reifenprofil-Negativstruktur 20 ermöglicht wird. In diesem Stadium streicht der Glättungsschieber 40 über die auf die Pressfläche 14 sowie die bereits gebildeten Reifenprofil-Negativstrukturschichten aufgebrachte Rohstoffpulverschicht ohne signifikant mit den Begrenzungswänden 16, 18 des Formsegmentrohlings 22 zusammenzuwirken. Der Glättungsschieber 40 ist jedoch so dimensioniert, dass seine Glättungsfläche 42 immer noch im Wesentlichen ganzflächig über die Rohstoffpulverschicht streicht.

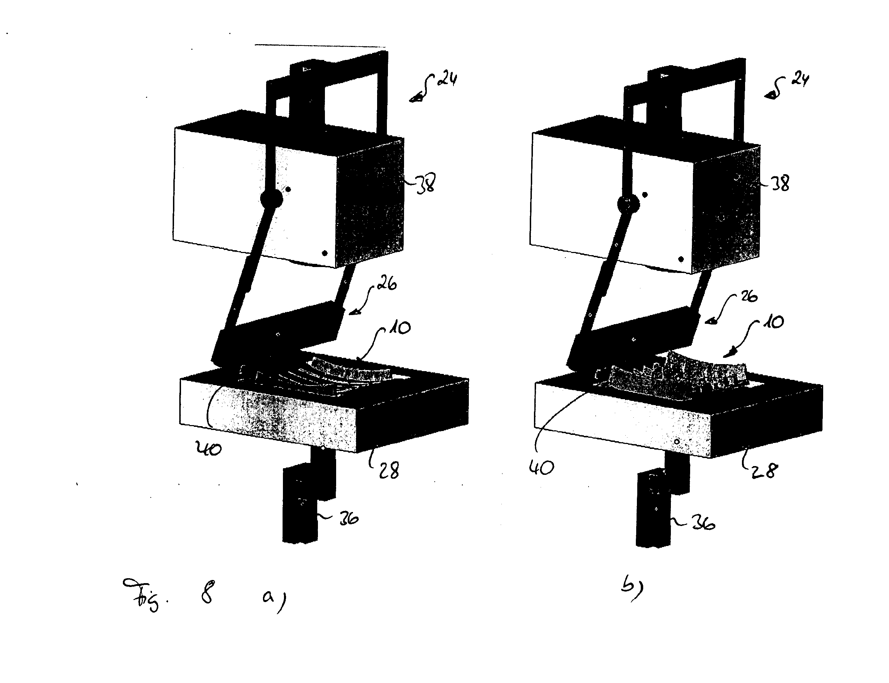

Wenn der Formgebungsprozess zur Erzeugung der Reifenprofil-Negativstruktur 20 abgeschlossen ist, wird der Träger 28, wie in Figur 8a gezeigt, vertikal in seine Ausgangsposition angehoben. Anschließend kann das fertige Vulkanisationsformsegment 10, siehe Figur 8b, von dem Träger 28 gelöst werden.

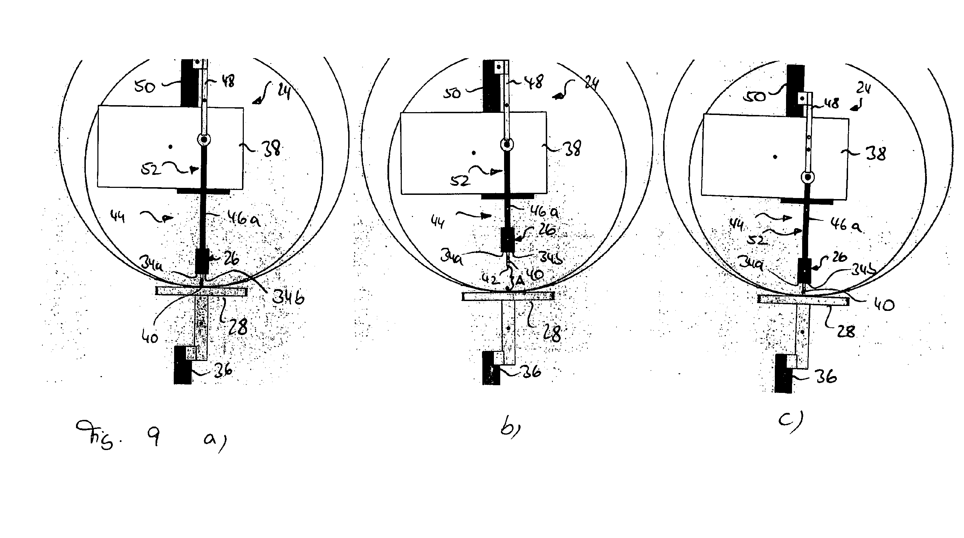

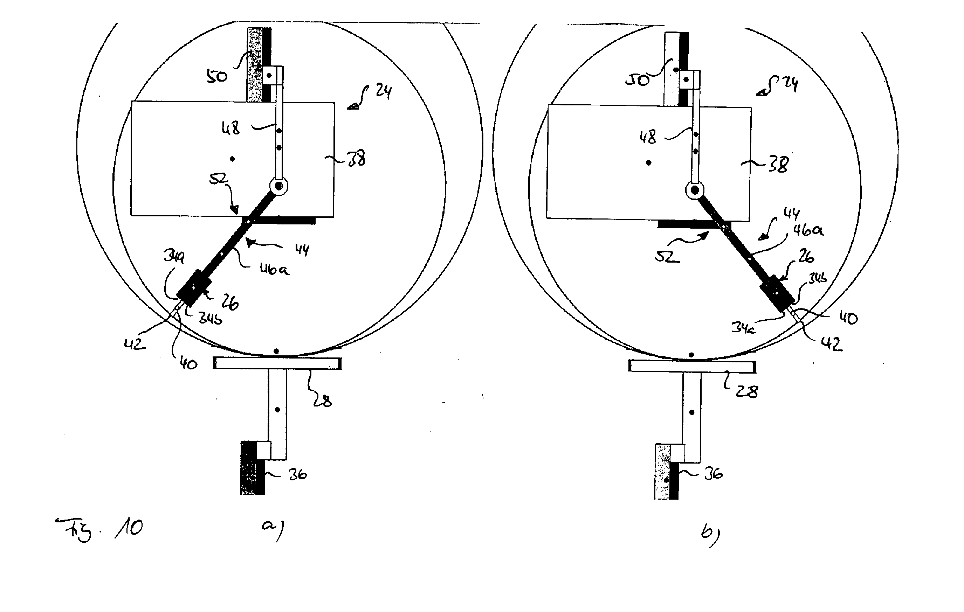

Wie in den Figuren 9a bis c und 10a bis b veranschaulicht ist, ist die Vorrichtung 24 dazu geeignet, dreidimensionale Strukturen auf gekrümmten Basisebenen mit unterschiedlichen Radien zu erzeugen. Beispielsweise kann die Vorrichtung 24 zur Herstellung von Vulkanisationsformsegmenten 10 genutzt werden, deren Pressflächen 14 unterschiedliche Radien aufweisen. Um die Vorrichtung 24 derart umzurüsten, dass sie zur Erzeugung einer dreidimensionalen Struktur auf einer gekrümmten Basisebene mit einem kleineren Radius geeignet ist, wird zunächst mittels einer Einstelleinrichtung 52 die Länge der Schwingarme 46a, 46b verkürzt. Die Einstelleinrichtung 52 kann in Form einer Teleskopeinrichtung ausgeführt sein. Alternativ können die Schwingarme 46a, 46b auch zweiteilig ausgeführt sein und die Einstelleinrichtung 52 eine Mehrzahl von Befestigungseinrichtungen zur Befestigung der Teile der Schwingarme 46a, 46b in unterschiedlichen Positionen aneinander umfassen.

Eine Verkürzung der Länge der Schwingarme 46a, 46b bewirkt, wie in Figur 9b veranschaulicht, dass die Pulverauftragvorrichtung 26 und damit auch die Pulverauslassöffnungen 34a, 34b und die Glättungsfläche 42 des Glättungsschiebers 40 in einem Abstand A von der Oberfläche des Trägers 28 positioniert werden. Um die Pulverauftragvorrichtung 26 und den Glättungsschieber 40 wieder in eine Position zu bringen, die einen ordnungsgemäßen Pulverauftrag auf den Träger 28 oder einen auf dem Träger 28 befestigten Rohling ermöglicht, wird die Gabel 48 mit den Schwingarmen 46a, 46b mittels der weiteren Hubvorrichtung 50 vertikal abgesenkt. Die Absenkung der Gabel 48 und der Schwingarme 46a, 46b erfolgt so weit, bis die Pulverauftragvorrichtung 46 und insbesondere die Glättungsfläche 42 des Glättungsschiebers 40 wieder eine gewünschte Position relativ zu dem Träger 28 erreicht haben, siehe Figur 9c. Die Pulverauftragvorrichtung 26 mit dem Glättungsschieber 40 kann dann, wie in den Figuren 10a und 10b gezeigt, entlang eines Kreisbahnsegments mit einem verringerten Radius relativ zu dem Träger 28 bewegt werden.

## Patentansprüche

1. Verfahren zur Herstellung einer dreidimensionalen Struktur auf einer gekrümmten Basisebene durch Beaufschlagen von Pulverschichten mit elektromagnetischer Strahlung oder Teilchenstrahlung, mit den Schritten:
- Auftragen einer Rohstoffpulverschicht auf die gekrümmte Basisebene mittels einer Pulverauftragvorrichtung (26),
- Glätten der auf die gekrümmte Basisebene aufgetragenen Rohstoffpulverschicht mittels eines Glättungsschiebers (40), der derart über die Rohstoffpulverschicht geführt wird, dass eine über die Rohstoffpulverschicht streichende Glättungsfläche (42) des Glättungsschiebers (40) parallel zu der gekrümmten Basisebene bewegt wird, und
- Beaufschlagen der geglätteten Rohstoffpulverschicht mit elektromagnetischer Strahlung oder Teilchenstrahlung.

2. Verfahren nach Anspruch 1,
**dadurch gekennzeichnet, dass** die Pulverauftragvorrichtung (26) derart über die gekrümmte Basisebene geführt wird, dass eine Rohstoffpulverauslassöffnung (34a, 34b) der Pulverauftragvorrichtung (26) parallel zu der gekrümmten Basisebene bewegt wird.

3. Verfahren nach Anspruch 1 oder 2,
**dadurch gekennzeichnet, dass** die Glättungsfläche (42) des Glättungsschiebers (40) und/oder die Rohstoffpulverauslassöffnung (34a, 34b) der Pulverauftragvorrichtung (26) entlang eines Kreisbahnsegments bewegt wird/werden, dessen Radius an einen Krümmungsradius der gekrümmten Basisebene angepasst ist.

4. Verfahren nach Anspruch 3,
**dadurch gekennzeichnet, dass** die Glättungsfläche (42) des Glättungsschiebers (40) und/oder die Rohstoffpulverauslassöffnung (34a, 34b) der Pulverauftragvorrichtung (26) durch mindestens einen schwenkbar gelagerten und mit dem Glättungsschieber (40) und/oder der Pulverauftragvorrichtung (26) verbundenen Schwingarm (46a, 46b) entlang des Kreisbahnsegments bewegt wird/werden, dessen Radius an den Krümmungsradius der gekrümmten Basisebene angepasst ist.

5. Verfahren nach Anspruch 4,
**dadurch gekennzeichnet, dass** der Radius des Kreisbahnsegments, das die Glättungsfläche (42) des Glättungsschiebers (40) und/oder die Rohstoffpulverauslassöffnung (34a, 34b) der Pulverauftragvorrichtung (26) beschreibt/beschreiben, durch Einstellung der Länge des Schwingarms (46a, 46b) festgelegt wird, und dass eine Lagereinrichtung (48) zur schwenkbaren Lagerung des Schwingarms (46a, 46b) derart relativ zu der gekrümmten Basisebene positioniert wird, dass die Glättungsfläche (42) des Glättungsschiebers (40) und/oder die Rohstoffpulverauslassöffnung (34a, 34b) der Pulverauftragvorrichtung (26) bei einer Variation der Länge des Schwingarms (46a, 46b) in einem konstanten Abstand von der gekrümmten Basisebene gehalten wird/werden.

6. Verfahren nach einem der Ansprüche 1 bis 5,
**dadurch gekennzeichnet, dass** ein Fokus eines elektromagnetischen Strahls oder eines Teilchenstrahls derart kontinuierlich nachjustiert wird, dass einer Formvariation des Fokus bei einer Bewegung des Fokus über die gekrümmte Basisebene entgegengewirkt wird und/oder dass eine Fokusebene, in der ein Fokus eines elektromagnetischen Strahls oder eines Teilchenstrahls liegt, bei einer Bewegung des Fokus über die gekrümmte Basisebene kontinuierlich an die Form der gekrümmten Basisebene angepasst wird.

7. Verfahren nach einem der Ansprüche 1 bis 6,
**dadurch gekennzeichnet, dass** die gekrümmte Basisebene von mindestens einer Begrenzungswand (16, 18) begrenzt wird, die sich von der gekrümmten Basisebene in einem Winkel erstreckt, der größer ist als 90°, und dass der Glättungsschieber (40) bei seiner Bewegung parallel zu der gekrümmten Basisebene zumindest beim Zusammenwirken mit einem an die gekrümmte Basisebene angrenzenden Abschnitt der Begrenzungswand (16, 18) elastisch verformt wird.

8. Vorrichtung zur Herstellung einer dreidimensionalen Struktur auf einer gekrümmten Basisebene durch Beaufschlagen von Pulverschichten mit elektromagnetischer Strahlung oder Teilchenstrahlung, mit:
- einer Pulverauftragvorrichtung (26) zum Auftragen einer Rohstoffpulverschicht auf die gekrümmte Basisebene,
- einem Glättungsschieber (40) zum Glätten der auf die gekrümmte Basisebene aufgetragenen Rohstoffpulverschicht, der dazu eingerichtet ist, mittels einer Führungseinrichtung (44) derart über die Rohstoffpulverschicht geführt zu werden, dass eine über die Rohstoffpulverschicht streichende Glättungsfläche (42) des Glättungsschiebers (40) parallel zu der gekrümmten Basisebene bewegt wird, und
- einer Bestrahlungseinrichtung (38) zur Beaufschlagung der geglätteten Rohstoffpulverschicht mit elektromagnetischer Strahlung oder Teilchenstrahlung.

9. Vorrichtung nach Anspruch 8,
**dadurch gekennzeichnet, dass** die Pulverauftragvorrichtung (26) dazu eingerichtet ist, mittels einer Führungseinrichtung (44) derart über die gekrümmte Basisebene geführt zu werden, dass eine Rohstoffpulverauslassöffnung (34a, 34b) der Pulverauftragvorrichtung (26) parallel zu der gekrümmten Basisebene bewegt wird.

10. Vorrichtung nach Anspruch 8 oder 9,
**dadurch gekennzeichnet, dass** die Führungseinrichtung(en) (44) zur Führung der Bewegung der Glättungsfläche (42) des Glättungsschiebers (40) und/oder der Rohstoffpulverauslassöffnung (34a, 34b) der Pulverauftragvorrichtung (26) dazu eingerichtet ist/sind, die Glättungsfläche (42) des Glättungsschiebers (40) und/oder die Rohstoffpulverauslassöffnung (34a, 34b) der Pulverauftragvorrichtung (26) entlang eines Kreisbahnsegments zu bewegen, dessen Radius an einen Krümmungsradius der gekrümmten Basisebene angepasst ist.

11. Vorrichtung nach Anspruch 10,
**dadurch gekennzeichnet, dass** die Führungseinrichtung(en) (44) zur Führung der Bewegung der Glättungsfläche (42) des Glättungsschiebers (40) und/oder der Rohstoffpulverauslassöffnung (34a, 34b) der Pulverauftragvorrichtung (26) mindestens einen schwenkbar gelagerten und mit dem Glättungsschieber (40) und/oder der Pulverauftragvorrichtung (26) verbundenen Schwingarm (46a, 46b) umfasst.

12. Vorrichtung nach Anspruch 11,
**dadurch gekennzeichnet, dass** die Führungseinrichtung(en) (44) zur Führung der Bewegung der Glättungsfläche (42) des Glättungsschiebers (40) und/oder der Rohstoffpulverauslassöffnung (34a, 34b) der Pulverauftragvorrichtung (26) eine Einstelleinrichtung (52) zur Einstellung der Länge des Schwingarms (46a, 46b) umfasst/umfassen, und dass eine Lagereinrichtung (48) zur schwenkbaren Lagerung des Schwingarms (46a, 46b) derart in verschiedenen Positionen relativ zu der gekrümmten Basisebene positionierbar ist, dass die Glättungsfläche (42) des Glättungsschiebers (40) und/oder die Rohstoffpulverauslassöffnung (34a, 34b) der Pulverauftragvorrichtung (26) bei einer Variation der Länge des Schwingarms (46a, 46b) in einem konstanten Abstand von der gekrümmten Basisebene gehalten werden kann/können.

13. Vorrichtung nach einem der Ansprüche 8 bis 12,
**dadurch gekennzeichnet, dass** die Bestrahlungseinrichtung (38) eine Justierungseinrichtung umfasst, die dazu eingerichtet ist, einen Fokus eines elektromagnetischen Strahls oder eines Teilchenstrahls derart kontinuierlich nachzujustieren, dass einer Vergrößerung des Fokus bei einer Bewegung des Fokus über die gekrümmte Basisebene entgegengewirkt wird und/oder dass die Bestrahlungseinrichtung (38) eine Anpassungsseinrichtung umfasst, die dazu eingerichtet ist, eine Fokusebene, in der ein Fokus eines elektromagnetischen Strahls oder eines Teilchenstrahls liegt, bei einer Bewegung des Fokus über die gekrümmte Basisebene kontinuierlich an die Form der gekrümmten Basisebene anzupassen.

14. Vorrichtung nach Anspruch13,
**dadurch gekennzeichnet, dass** die gekrümmte Basisebene von mindestens einer Begrenzungswand (16, 18) begrenzt wird, die sich von der gekrümmten Basisebene in einem Winkel erstreckt, der größer ist als 90°, und dass der Glättungsschieber (40) aus einem Material besteht und derart geformt ist, dass der Glättungsschieber (40) bei der Bewegung des Glättungsschiebers (40) parallel zu der gekrümmten Basisebene zumindest beim Zusammenwirken mit einem an die gekrümmte Basisebene angrenzenden Abschnitt der Begrenzungswand (16, 18) eine elastische Verformung erfährt.

15. Formelement (10) zur Verwendung bei der Herstellung von rotationssymmetrischen Bauteilen bei dem zumindest eine auf einer Pressfläche (14) des Formelements (10) vorgesehene Negativstruktur (20) mittels eines Verfahrens nach einem der Ansprüche 1 bis 7 und/oder mittels einer Vorrichtung nach einem der Ansprüche 8 bis 14 hergestellt ist.

16. Rotationssymmetrisches Bauteil, das unter Verwendung eines Formelements (10) nach Anspruch 15 hergestellt ist.
